(19) Europäisches Patentamt
European Patent Office
Office européen des brevets

(11) Numéro de publication: **0 115 224**
**B1**

(12) **FASCICULE DE BREVET EUROPÉEN**

(45) Date de publication du fascicule du brevet: **18.03.87**

(51) Int. Cl.⁴: **G 05 G 9/16,** B 60 K 20/12

(21) Numéro de dépôt: **83402261.8**

(22) Date de dépôt: **23.11.83**

(54) **Dispositif de commande de boîte de vitesses avec tige sur rotule coulissante.**

(30) Priorité: **24.11.82 FR 8219671**

(43) Date de publication de la demande: **08.08.84 Bulletin 84/32**

(45) Mention de la délivrance du brevet: **18.03.87 Bulletin 87/12**

(84) Etats contractants désignés: **DE GB IT**

(56) Documents cité:
**EP-A-0 084 472**
**FR-A-1 399 437**
**FR-A-1 475 771**
**FR-A-2 345 306**
**FR-E-85 376**
**FR-E-91 733**

(73) Titulaire: **AUTOMOBILES PEUGEOT, 75, avenue de la Grande Armée, F-75116 Paris (FR)**
Titulaire: **AUTOMOBILES CITROEN, 62 Boulevard Victor- Hugo, F-92200 Neuilly- sur- Seine (FR)**

(72) Inventeur: **Lefebvre, Pascal, 10 Place Hoche, F-78000 Versailles (FR)**

(74) Mandataire: **Moncheny, Michel, c/o Cabinet Lavoix 2 Place d'Estienne d'Orves, F-75441 Paris Cedex 09 (FR)**

EP 0 115 224 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1987

## Description

L'invention est relative aux dispositifs de commande de boîte de vitesses pour véhicules automobiles, dispositifs comportant un levier de manoeuvre porté, en un point relativement éloigné de la boîte de vitesses, par un palier sphérique solidaire de la caisse du véhicule, et relié par une même tige longitudinale à deux éléments mobiles de la boîte de vitesses. Le premier de ces éléments mobiles est relié par une premiére biellette à un levier de sélection sensiblement vertical solidaire de la tige, de sorte qu'un basculement transversal du levier de manoeuvre réalise la sélection des rapports de la boîte de vitesses. Le deuxiéme élément mobile est, lui, relié par une deuxième biellette à un levier de renvoi d'axe vertical, dont un bras transversal est lié à la tige par une articulation à rotule, de sorte qu'un basculement longitudinal du levier de manoeuvre réalise le passage des rapports.

Dans une disposition simple ne nécessitant pas de palier de guidage de la tige, celle-ci est portée d'une part par l'articulation à rotule la reliant au levier de renvoi et, d'autre part, par un axe transversal la reliant au levier de manoeuvre de manière qu'un basculement transversal de celui-ci provoque un pivotement de la tige autour de son axe.

Cette disposition présente l'inconvénient de provoquer une notable incurvation transversale des mouvements longitudinaux du levier, lors du passage des rapports, car les déplacements longitudinaux de la tige sont accompagnés de légères inclinaisons transversales dues au fait que l'articulation à rotule la reliant au levier de renvoi, de même que l'articulation reliant le levier de sélection à la première biellette, décrivent des arcs de cercle, d'autant plus incurvés que cette biellette, la tige et le bras transversal du levier de renvoi sont plus courts dans un but de légèreté et de faible encombrement du dispositif.

L'invention vise à réduire cet inconvénient en réalisant un dispositif de commande de boîte de vitesses dans lequel tout basculement du levier de manoeuvre, lors du passage d'un rapport, s'effectue dans un plan longitudinal, sans incurvation transversale, et qui cependant soit simple et peu encombrant.

Dans ce but l'invention a pour objet un dispositif de commande du type susmentionné, comportant un levier de manoeuvre porté, en un point relativememt éloigné de la boîte de vitesses, par un palier sphérique solidaire de la caisse du véhicule, et relié par une même tige longitudinale à deux éléments mobiles de la boîte de vitesses, sur chacun desquels est articulée une biellette transversale, l'une de ces biellettes étant attaquée par un levier de sélection vertical solidaire de la tige, tandis que l'autre est attaquée, pour le passage des rapports, par un levier de renvoi d'axe vertical dont un bras transversal est relié par une articulation à rotule à la tige, et la tige étant en outre articulée sur une troisième biellette transversale la reliant à un point sensiblement fixe du véhicule et, à son extrémité opposée aux biellettes, sur un axe transversal solidaire du levier de manoeuvre. Dans ce dispositif, l'articulation à rotule est mobile par rapport à la tige dans une direction transversale sensiblement parallèle aux biellettes et au bras transversal du levier de renvoi.

Selon un mode de réalisation préféré, l'articulation à rotule comporte une rotule fixée sur le bras transversal du levier de renvoi, et un siège extérieurement cylindrique monté coulissant dans un alésage transversal de la tige. Cet alésage est notamment le logement intérieur d'une pièce tubulaire fixée à la tige par exemple par soudage.

L'articulation à rotule est disposée au voisinage d'une ligne joignant les centres des articulations reliant la tige à la troisième biellette et au levier de manoeuvre.

Un exemple de réalisation du dispositif de commande selon l'invention est décrit ci-après, avec référence aux dessins annexés parmi lesquels:

- la fig. 1 est une vue schématique, en perspective, du dispositif de commande;
- la fig. 2 est une vue d'une partie du dispositif, en coupe suivant la ligne II-II de la figure 1.

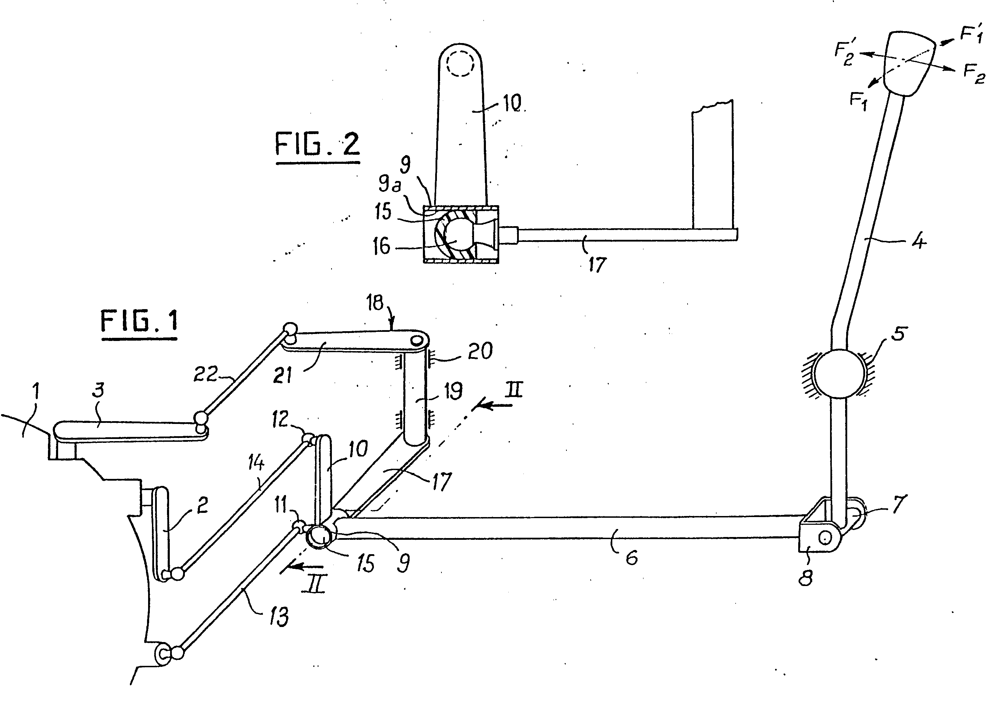

On voit sur la figure 1 un dispositif de commande de la boîte de vitesses 1 d'un véhicule, ce dispositif étant adapté pour déplacer successivement deux éléments mobiles, 2, 3 de la boîte de vitesses par des déplacements respectivement transversaux (flèches $F_1$, $F'_1$) et longitudinaux (flèches $F_2$, $F'_2$) d'un levier de manoeuvre 4 sensiblement vertical et relativement éloigné de la boîte de vitesses 1.

Le levier 4 est porté par un palier sphérique 5 solidaire de la caisse du véhicule, et est articulé sur l'une des extrémités d'une tige longitudinale 6 au moyen d'un axe transversal 7 solidaire du levier et monté dans une chape 8 d'extrémité de la tige. L'autre extrémité de la tige 6 porte une pièce tubulaire 9 d'axe transversal horizontal d'où part un levier vertical 10, dit levier de sélection, ces quatre pièces 6, 8, 9 et 10 étant notamment métalliques et assemblées par soudage. La pièce tubulaire ou manchon 9 et l'extrémité opposée du levier 10 sont équipées chacune d'une rotule 11, 12, sur laquelle s'articule l'une de deux biellettes transversales sensiblement parallèles et horizontales, 13, 14, de longueurs sensiblement égales et respectivement reliées à la boîte de vitesses 1 et à l'élément mobile 2.

Dans le logement cylindrique interne (9a)de la pièce tubulaire 9 coulisse, au voisinage d'une ligne joignant les centres des articulations 7 et 11, un siège 15 (Fig.2) extérieurement cylindrique mais intérieurement sphérique, qui coopère avec une rotule 16 solidaire du bras horizontal transversal 17 d'un levier de renvoi 18. Le levier 18 comporte également un axe vertical 19 qui pivote dans un palier 20 fixé à la caisse du véhicule et un bras longitudinal 21 relié à l'élément mobile 3 par une biellette transversale 22.

La tige 6 est ainsi portée d'un côté par le palier sphérique fixe 5, par l'intermédiaire du levier 4 et de l'axe transversal 7, et de l'autre côté par le palier 20, par l'intermédiaire du bras 17 et de la rotule 16. Le maintien transversal de la tige 6 est assuré à une extrémité par la biellette 13 et à l'autre par le levier 4 qui est constamment retenu sensiblement dans le même plan radial à la tige 6 que le levier 10, par le montage de l'axe transversal 7 dans la chape 8.

Ainsi, lorsqu'on déplace le levier 4 transversalement (flèches $F_1$, $F'_1$), on provoque la rotation de la tige 6 autour de son axe passant sensiblement par le centre des rotules 11, 15, et le basculement du levier de sélection 10 parallèlement à celui du levier 4, la biellette 13 maintenant transversalement l'extrémité de la tige située à proximité du levier de sélection 10. En basculant, ce levier 10 déplace transversalement la biellette 14 et l'élément mobile 2, réalisant ainsi la sélection d'au moins un rapport.

Le déplacement longitudinal du levier 4 (flèches $F_2$, $F'_2$) provoque ensuite le déplacement longitudinal de la tige 6 et, par l'intermédiaire de l'articulation à rotule 15, 16, le pivotement du levier de renvoi 18 autour de son axe vertical. Le bras 21 de ce levier entraîne transversalement la biellette 22 et l'élément mobile 3,ce qui réalise le passage d'un rapport.

Au cours de ce mouvement, la rotule 16 décrit un arc de cercle horizontal centré sur l'axe de pivotement du levier de renvoi 18 et entraîne son siège 15 qui coulisse dans l'alésage de la pièce tubulaire 9 retenue transversalement par la biellette 13. Par suite, la liaison entre le bras 17 et la tige 6 n'induit aucun mouvement transversal de cette tige. Le levier de sélection 10 se déplace avec la tige 6 tout en restant toujours parallèle à sa direction sélectionnée, et les rotules 11 et 12 décrivent des arcs de cercle horizontaux sensiblement parallèles puisque les biellettes 13 et 14 sont parallèles et de longueurs égales ou peu différentes. La translation du levier 10 est donc légèrement incurvée. Toutefois, le levier de manoeuvre 4, étant dans le même plan radial à la tige que le levier 10, reste aussi parallèle à sa direction sélectionnée et ne subit en fait aucun basculement transversal indésirable pendant le passage d'un rapport. Autrement dit, le basculement du levier 4 s'effectue dans un plan longitudinal sans incurvation transversale.

Il est bien évident que la biellette 13 pourrait, en variante, relier la tige 6 à une partie fixe de la caisse du véhicule. La disposition représentée, où cette biellette relie la tige 6 à une partie de la boîte de vitesses, est cependant préférable dans le cas où la boîte 1 est fixée à la caisse avec interposition de supports élastiques autorisant de légers déplacements transversaux relatifs entre elles, car ces déplacements sont eccompagnés de déplacements relatifs de la pièce tubulaire 9 et de l'articulation à rotule 15, 16, sans influencer la position choisie des autres organes et notamment du levier de manoeuvre. En effet, les déplacements transversaux de la boîte de vitesses provoquent, par l'intermédiaire des biellettes 13 et 14, une translation transversale du levier 10 qui, étant solidaire du manchon 9, coulisse avec lui sur l'articulation à rotule 15, 16. Ce levier 10 reste encore parallèle à sa direction sélectionnée. Il en est de même du levier de manoeuvre 4; autrement dit, ce levier n'est pas soumis à des mouvements transversaux intempestifs lors des déplacements relatifs entre la boîte de vitesses et la caisse du véhicule.

## Revendications

1 - Dispositif de commande de boîte de vitesses pour véhicules automobiles, comportant un levier de manoeuvre (4) porté, en un point relativement éloigné de la boîte de vitesses, par un palier sphérique (5) solidaire de la caisse du véhicule, et relié par une même tige longitudinale (6) à deux éléments mobiles de (2, 3) la boîte de vitesses, sur chacun desquels est articulée une biellette transversale (14, 22), l'une de ces biellettes (14) étant attaquée par un levier vertical de sélection (10) solidaire de la tige (6), tandis que l'autre (22) est attaquée, pour le passage des rapports, par un levier de renvoi (18), d'axe vertical, dont un bras transversal (17) est relié par une articulation à rotule (15, 16) à la tige; la tige (6) étant en outre articulée moyen ent une acticulation (11) sur une troisième biellette transversale (13) la reliant à un point sensiblement fixe du véhicule et, à son extrémité opposée aux biellettes, (13, 14, 22) sur un axe transversal (7) solidaire du levier de manoeuvre (4), caractérisé en ce que l'articulation à rotule (15, 16) est mobile par rapport à la tige (6) dans une direction transversale sensiblement parallèle aux biellettes (13, 14, 22) et au bras transversal (17) du levier de renvoi (18).

2 - Dispositif suivant la revendication 1, caractérisé en ce que l'articulation à rotule (15, 16) comporte une rotule (16) fixée sur le bras transversal (17) du levier de renvoi, et un siège (15) extérieurement cylindrique, monté coulissant dans un alésage transversal (9a) de la tige (6).

3 - Dispositif suivant la revendication 2, caractérisé en ce que l'alésage transversal (9a) de la tige (6) est constitué par le logement intérieur cylindrique d'une piéce tubulaire (9) fixée transversalement sur la tige, (6) notamment par soudage.

4 - Dispositif suivant la revendication 3, caractérisé en ce que l'articulation à rotule (15, 16) est disposée à proximité d'une ligne joignant les centres des articulations (11 et 7) reliant la tige (6) respectivement à la troisième biellette (13) et au levier de manoeuvre (4).

## Claims

1. A device for controlling a gear box for motor vehicles, comprising a shifting lever (4) carried, at a point relatively remote from the gear box, by a spherical bearing (5) mounted on the body of the vehicle and connected by a common longitudinal rod (6) to two moving elements (2, 3) of the gear box, on each of which is articulated a transverse link (14, 22), one of these links (14) being acted upon by a vertical selecting lever (10) connected to the rod (6), while the other (22) is acted upon, for changing the ratios, by a crank lever (18) having a vertical axis and whose transverse arm (17) is connected by a ball joint (15, 16) to the rod; the rod (6) being moreover articulated by an articulation (11) to a third transverse link (13) connecting it to a substantially fixed point of the vehicle and, at its end opposed to the links (13, 14, 22), to a transverse shaft (7) mounted on the shifting lever (4) characterised in that the ball joint (15, 16) is movable relative to the rod (6) in a transverse direction substantially parallel to the links (13, 14, 22) and to the transverse arm (17) of the crank lever (18).

2. A device according to claim 1, characterised in that the ball joint (15, 16) includes a ball (16) fixed to the transverse arm (17) of the crank lever, and an externally cylindrical socket (15) slidably mounted in a transverse bore (9a) of the rod (6).

3. A device according to claim 2, characterised in that the transverse bore (9a) of the rod (6) is constituted by the cylindrical inner cavity of a tubular member (9) transversely fixed on the rod (6) in particular by welding.

4. A device according to claim 3, characterised in that the ball joint (15,16) is disposed in the vicinity of a line joining the centres of the articulations (11 and 7) connecting the rod (6) respectively to the third link (13) and to the shifting lever (4).

## Patentansprüche

1. Steuervorrichtung für Gangschaltgetriebe von Kraftfahrzeugen, mit einem Betätigungshebel (4) auf einem fest mit der Fahrzeugkarosserie verbundenen Kugellager (5), welches in verhältnismäßig großem Abstand von dem Gangschaltgetriebe vorgesehen ist, wobei der Betätigungshebel über eine ähnlich lange Stange (6) mit zwei beweglichen Elementen (2, 3) des Gangschaltgetriebes verbunden ist, an die jeweils ein quer gerichteter Schwingarm (14, 22) angelenkt ist, und wobei an einen (14) dieser Schwingarme ein vertikaler, mit der Stange (6) verbundener Schalthebel (10) angreift, während an den anderen (22) dieser Schwingarme ein Umlenkhebel (18) mit vertikaler Achse zum Einlegen der Gänge angreift, von dem ein Arm (17) über ein Kugelkopfgelenk (15, 16) mit der Stange verbunden ist, wobei die Stange (6) darüber hinaus über ein Gelenk (11) an einen dritten quergerichteten Schwingarm (13), der die Stange (6) mit einem im wesentlichen festen Punkt des Fahrzeugs verbindet, und mit ihrem den Schwingarmen (13, 14, 22) entgegengesetzten Ende an eine quergerichtete Achse (7) angelenkt ist, welche fest mit dem Betätigungshebel (4) verbunden ist, dadurch gekennzeichnet, daß das Kugelkopfgelenk (15, 16) in bezug auf die Stange (6) quer und im wesentlichen parallel zu den Schwingarmen (13, 14, 22) sowie zu dem Querarm (17) des Umlenkhebels (18) beweglich ist.

2. Vorrichtung nach Anspruch 1, dadurch gekennzeichnet, daß das Kugelkopfgelenk (15, 16) einen an dem Querarm (17) des Umlenkhebels befestigten Kugelkopf (16) sowie einen außen zylindrischen Sitz (15) aufweist, welcher gleitend in einer Querbohrung (9a) der Stange (6) angeordnet ist.

3. Vorrichtung nach Anspruch 2, dadurch gekennzeichnet, daß die Querbohrung (9a) der Stange (6) aus der zylindrischen inneren Aufnahme eines röhrenförmigen Elementes (9) gebildet ist, welches in Querrichtung an der Stange (6), insbesondere durch Schweißen, befestigt ist.

4. Vorrichtung nach Anspruch 3, dadurch gekennzeichnet, daß das Kugelkopfgelenk (15, 16) in der Nähe einer die Mittelpunkte der Gelenke (11 und 7) verbindenden Linie angeordnet ist, die die Stange (6) mit dem dritten Schwingarm (13) bzw. mit dem Betätigungshebel (4) verbinden.

FIG. 2
FIG. 1
$F_1'$
$F_2'$
$F_2$
$F_1$
10
9
9a
15
16
17
4
5
18
20
21
22
1
3
19
II
12
10
14
17
11
2
6
7
8
15
9
II
13